# EUROPEAN PATENT APPLICATION

(11) **EP 1 549 084 A1**
(43) Date of publication of application: **29.06.2005**
(21) Application number: 03794071.5
(22) Date of filing: 30.07.2003
(51) Int. Cl.: H04N 13/00, G06T 17/40

(54) **DEVICE CAPABLE OF EASILY CREATING AND EDITING A CONTENT WHICH CAN BE VIEWED IN THREE-DIMENSIONAL WAY**

(30) Priority: 29.08.2002 JP 2002250469; 11.11.2002 JP 2002326897
(71) Applicant: Sharp Kabushiki Kaisha, Osaka-shi, Osaka 545-8522 (JP)
(72) Inventor: ZAIMA, Hiroaki, Tenri-shi, Nara 632-0004 (JP)
(74) Representative: Brown, Kenneth Richard
(86) International application number: PCT/JP2003/009703
(87) International publication number: WO 2004/023824

(57) **Abstract**

A depth in a z axis direction is set for each figure drawn on a xy plane in an image that includes figures, so that each figure exists in each layer that has been set for each depth in the z axis direction, and thereby, stereoscopic contents are prepared in a contents preparation apparatus. An image is stereoscopically displayed on the basis of the depth that has been set, and thereby, the stereoscopic contents can be displayed in a contents reproduction apparatus. In addition, only figures that exist in a selected layer are displayed, and thereby, the depth of stereoscopic contents can be easily confirmed, even in a two-dimensional display in a contents editing apparatus.

## Description

### Technical Field

The present invention relates to a contents preparation apparatus, a contents editing apparatus, a contents reproduction apparatus, a contents preparation method, a contents editing method, a contents reproduction method, a contents preparation program product, a contents editing program product and a portable communication terminal, and in particular, a contents preparation apparatus, a contents editing apparatus, a contents reproduction apparatus, a contents preparation method, a contents editing method, a contents reproduction method, a contents preparation program product, a contents editing program product and a portable communication terminal which can facilitate preparation and editing of stereoscopic contents.

### Background Art

An information processing apparatus which can display in stereoscope has been developed as a result of the recent advance in information processing apparatuses.

A variety of methods have been proposed to prepare or edit stereoscopic contents that can be reproduced in such an information processing apparatus which can display in stereoscope.

In order to implement conventional preparation processing or editing processing of stereoscopic contents, however, a very complex control mechanism is required. A head mount display, rendering software for rendering stereoscopic contents and the like, for example, are required to be prepared. Furthermore, a high level technology is required to prepare or edit stereoscopic contents by using such rendering software. Therefore, a problem arises where preparation and editing of stereoscopic contents are impossible in the case where there is no such specific software or in the case where there is no such high level technology available.

The present invention is provided in order to solve such a problem, and an object thereof is to provide a contents preparation apparatus, a contents editing apparatus, a contents reproduction apparatus, a contents preparation method, a contents editing method, a contents reproduction method, a contents preparation program product, a contents editing program product and a portable communication terminal which can easily prepare and edit stereoscopic contents.

### Disclosure of the Invention

In order to solve the above-described problem, the present invention provides a contents preparation apparatus, a contents editing apparatus, a contents reproduction apparatus, a contents preparation method, a contents editing method, a contents reproduction method, a contents preparation program product, a contents editing program product and a portable communication terminal as shown in the following.

More specifically, according to one aspect of the present invention, a contents preparation apparatus includes a depth information setting part which sets depth information for two-dimensional figure data, and an output part which outputs figure data where depth information has been set.

In addition, according to another aspect of the present invention, a contents editing apparatus editing contents where depth information has been set for two-dimensional figure data, includes a display information input part which accepts an input of depth information on the depth to be displayed, and a display part which displays only figure data where the accepted depth information has been set.

In addition, according to still another aspect of the present invention, a contents editing apparatus editing contents where depth information on the relative relationship of depth between two-dimensional figure data and a predetermined plane that is a reference plane has been set, includes a reference plane depth information setting part which sets depth information for a reference plane, and a depth editing part which edits depth information that has been set for figure data in accordance with depth information that has been set for the reference plane.

In addition, according to yet another aspect of the present invention, a contents reproduction apparatus stereoscopically reproducing contents that include two-dimensional figure data where depth information has been set, includes a depth information read-out part which reads out depth information from figure data, a shift amount calculation part which selects a calculation method from among a plurality of calculation methods for amount of shift in accordance with the results of contents analysis and calculates an amount of shift in images between data for the left eye and data for the right eye of the figure data on the basis of the read out depth information, a generation part which generates data for the left eye and data for the right eye on the basis of the calculated shift amount, and a reproduction part which reproduces the generated data for the left eye and data for the right eye.

In addition, according to yet another aspect of the present invention, a contents preparation method includes a depth information setting step of setting depth information for two-dimensional figure data, and an output step of outputting figure data where depth information has been set.

In addition, according to yet another aspect of the present invention, a contents editing method editing contents where depth information has been set for two-dimensional figure data, includes a display information input step of accepting an input of depth information on a depth to be displayed, and a display step of displaying only figure data where the accepted depth information has been set.

In addition, according to yet another aspect of the present invention, a contents editing method editing contents where depth information on the relationship of depth between two-dimensional figure data and a predetermined plane that is a reference plane has been set, includes a reference plane depth information setting step of setting depth information for the reference plane, and a depth editing step of editing depth information that has been set in figure data in accordance with depth information that has been set for the reference plane.

In addition, according to yet another aspect of the present invention, a contents reproduction method stereoscopically reproducing contents that include two-dimensional figure data where depth information has been set, includes a depth information read-out step of reading out depth information from figure data, a shift amount calculation step of calculating an amount of shift in images between data for the left eye and data for the right eye of figure data on the basis of the read out depth information, a generation step of generating data for the left eye and data for the right eye on the basis of the calculated shift amount, and a reproduction step of reproducing the generated data for the left eye and data for the right eye.

In addition, according to yet another aspect of the present invention, a contents preparation program product allows a computer to execute a depth information setting step of setting depth information for two-dimensional figure data, and an output step of outputting figure data where depth information has been set.

In addition, according to yet another aspect of the present invention, a contents editing program product making a computer execute a contents editing method for editing contents where depth information has been set for two-dimensional figure data, allows a computer to execute a display information input step of accepting an input of depth information on a depth to be displayed, and a display step of displaying only figure data where the accepted depth information has been set.

In addition, according to yet another aspect of the present invention, a portable communication terminal stereoscopically reproducing contents that include two-dimensional figure data where depth information has been set, includes a depth information read-out part which reads out depth information from figure data, a shift amount calculation part, and calculates an amount of shift in images between data for the left eye and data for the right eye of figure data on the basis of the read out depth information, a generation part which generates data for the right eye and data for the right eye on the basis of the calculated shift amount, and a reproduction part which reproduces the generated data for the left eye and data for the right eye.

### Brief Description of the Drawings

Fig. 1 is a diagram showing a concrete example of the configuration of a contents preparation apparatus 1 according to the present embodiment.
Fig. 2 is a diagram showing a concrete example of a plan diagram of an image that is included in stereoscopic contents according to the present embodiment.
Fig. 3 is a diagram showing the state where the respective figures included in an image exist in the respective layers that have been set for each depth in the direction of the z axis.
Fig. 4 is a flowchart showing contents preparation processing in contents preparation apparatus 1 according to the present embodiment.
Fig. 5 is a diagram showing a concrete example of a depth information setting menu.
Fig. 6 is a diagram showing a concrete example of a deepness information table.
Fig. 7 is a diagram showing a concrete example of a figure table.
Fig. 8 is a diagram showing a concrete example of a screen that is displayed on 2-D display part 106 when a figure has been selected.
Figs. 9 and 12 are diagrams showing concrete examples of a depth information confirmation menu.
Figs. 10 and 13 are diagrams showing the state where only the figures that exist in the layers in a range of designated depths have been sampled.
Figs. 11 and 14 are diagrams showing concrete examples of displays on 2-D display part 106 where only figures that exist in the layers in a range of designated depths have been displayed.
Fig. 15 is a diagram showing a concrete example of an editing menu.
Fig. 16 is a diagram showing the state where deepness information that corresponds to all of the depth layers that have been prepared has been edited.
Fig. 17 is a diagram showing a concrete example of a display of a figure where the depth information has been edited.
Fig. 18 is a diagram showing a concrete example of the configuration of a contents reproduction apparatus 2 according to the present embodiment.
Fig. 19 is a diagram showing a concrete example of pictures viewed by the left eye and the right eye of a human.
Figs. 20A and 20B are diagrams showing the state where an image for the left eye and an image for the right eye have been generated from a figure where depth information has been set.
Fig. 21 is a diagram showing the display mechanism of a stereoscopic image on 3-D display part 207.
Fig. 22 is a flowchart showing contents reproduction processing in contents reproduction apparatus 2 according to the present embodiment.
Fig. 23 is a diagram showing a concrete example of the configuration of contents preparation apparatus 1 according to a modification of the present embodiment.
Fig. 24 is a flowchart showing contents preparation processing in contents preparation apparatus 1 according to the modification.
Fig. 25 is a flowchart showing contents reproduction processing in contents reproduction apparatus 2 according to the modification.
Fig. 26 is a diagram showing a concrete example of the configuration of contents reproduction apparatus 2 according to the modification of the present embodiment.
Fig. 27 is a diagram showing a concrete example of the configuration of a contents conversion apparatus 3.
Figs. 28 and 29 are diagrams showing concrete examples of key frame images.
Fig. 30 is a diagram showing a concrete example of an interpolated image.

### Best Modes for Carrying Out the Invention

In the following, the embodiments of the present invention are described with reference to the drawings. In the following description, the same symbols are attached to the same parts and constituent features. Their names and functions are the same. Accordingly, detailed descriptions for these are not repeated.

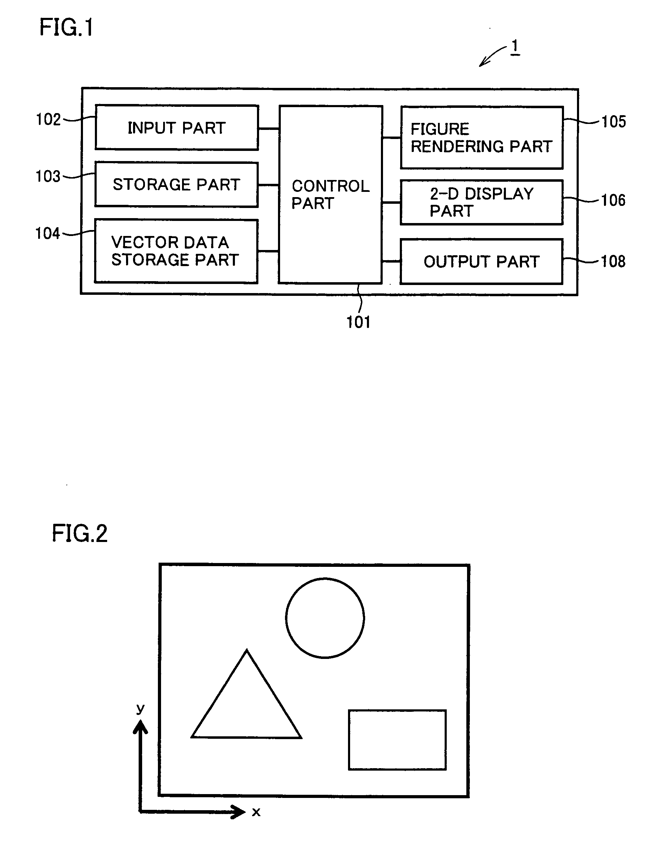

Fig. 1 is a diagram showing a concrete example of the configuration of a contents preparation apparatus 1 according to the present embodiment. With reference to Fig. 1, contents preparation apparatus 1 includes a control part 101 which is formed of a CPU (central processing unit) or the like, and which controls the entirety of the apparatus, an input part 102 which is formed of a keyboard, mouse and the like, and which accepts an input of information from a contents preparer, a storage part 103 which is formed of a ROM (Read Only Memory), a RAM (Random Access Memory) or the like, and which stores programs and the like that are implemented in control part 101, a figure rendering part 105 for rendering a figure that is included in contents, a vector data storage part 104 for storing vector data that is included in a figure that is rendered by figure rendering part 105, a 2-D display part 106 which is formed of a display or the like, and which displays contents or the like in a 2-D mode, and an output part 108 for outputting the prepared contents data and the like.

Here, contents preparation apparatus 1 is constructed by using a general personal computer or the like, and the configuration thereof is not limited to the above-described configuration.

Stereoscopic contents are prepared by using such a contents preparation apparatus 1 according to the present embodiment. Here, the stereoscopic contents are typically contents where a plurality of stereoscopic images (referred to as key frames) which are chronologically intermittent are formed sequentially along the time axis. Contents which have been formed in such a manner can be expressed as an animation or the like. Such contents are reproduced in a manner where images between designated key frames are automatically interpolated. That is to say, figures which are included in an image between two key frames are automatically generated at the time of the reproduction of the contents.

Thus, image data that is included in stereoscopic contents prepared according to the present embodiment is polygon data, still images, animation images and text that include vector data consisted of information on attribute and information on coordinate points that form two-dimensional images, which is characterized in that this attribute information includes deepness information for indicating the degree of depth. This vector data is stored in a figure table for each figure and is stored in vector data storage part 104. In addition, figures which are included in the image data are not limited to two-dimensional images such as circles and triangles, and include one-dimensional images such as points and lines.

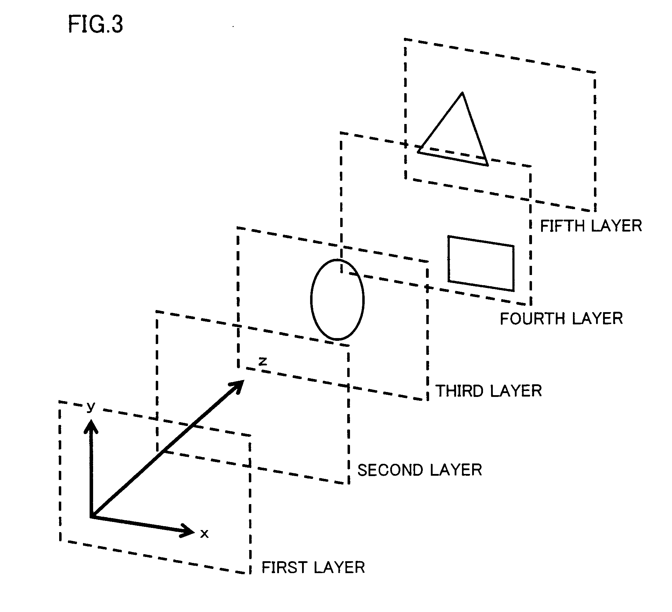

An image that includes figures, a circle, a triangle and a rectangle in the xy plane is described concretely with reference to Fig. 2. The respective figures of an image that is included in the stereoscopic contents according to the present embodiment exist in the respective layers which have been set for each depth in the direction of the z axis, as shown in Fig. 3.

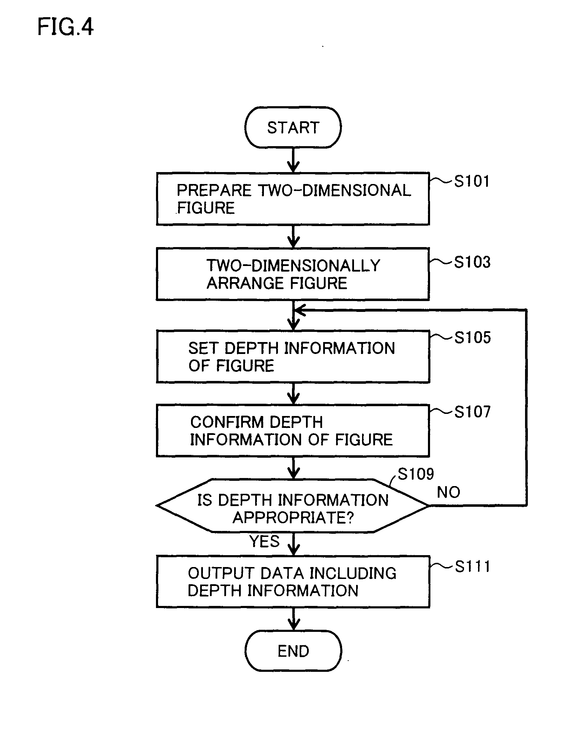

Next, contents preparation processing for preparing stereoscopic contents as described above in contents preparation apparatus 1 according to the present embodiment is described with reference to the flowchart of Fig. 4. Control part 101 of contents preparation apparatus 1 reads out and implements the program that has been stored in storage part 103, and thereby, the processing shown in the flowchart of Fig. 4 is initiated.

With reference to Fig. 4, first, a two-dimensional figure (in the xy plane) is prepared in figure rendering part 105 (S101). Here, the data on the prepared two-dimensional figure includes data on configuration points and control points that determine the two-dimensional form. In addition, the figure includes a still image, an animation image and text.

Processing for preparing a figure in figure rendering part 105 is the same as general rendering processing. Here, though it is assumed in the following description that depth information is set after a figure in a plane has been prepared in step S101, the following processing can be implemented by using a figure, a photograph or the like that has been prepared in advance.

Next, the arrangement of the figure that has been prepared in step S101 is determined within a standard plane based on an input from figure rendering part 105 or input part 102 (S103). Processing for this arrangement is also the same as in general rendering processing.

In addition, the order of step S101 and step S103 may be switched. That is to say, in the case where a figure is prepared or a still image is inserted after layer information has been set, a figure or a still image having layer information that has been set in advance can be prepared so as to be arranged.

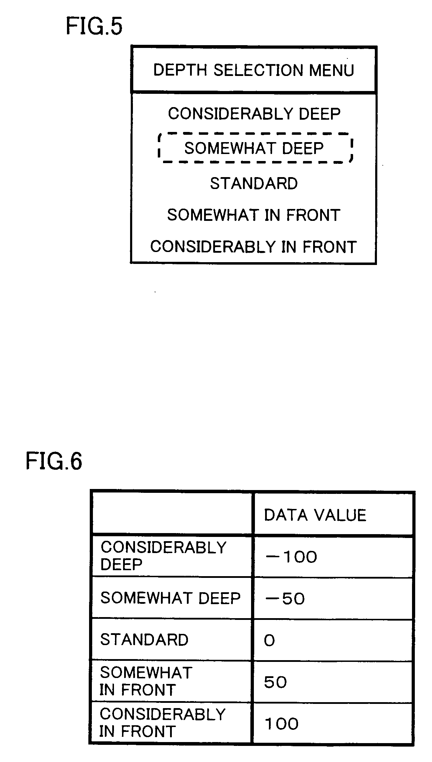

Next, control part 101 sets depth information for the prepared figure (S105). In order to set depth information in step S105, a depth information setting menu for setting depth information is first displayed on 2-D display part 106. Here, Fig. 5 shows a concrete example of a depth information setting menu that is displayed. The depth information setting menu of which a concrete example is shown in Fig. 5 may be displayed by replacing the prepared plan diagram, may be displayed in a predetermined portion on the screen, together with the plan diagram, or may be displayed as a pop-up menu.

Furthermore, as shown in Fig. 5, the present embodiment is characterized in that depth information is not set by using numeral values indicating concrete deepness, but rather, by using depth expression choices indicating respective layers, such as "considerably deep," "somewhat deep," "standard," "somewhat in front" and "considerably in front." Here, depth symbol choices such as numeral values or symbols corresponding to the respective layers may, of course, be used instead of the above-described depth expression choices, such as the expression "considerably deep," indicating the respective layers.

The depth information indicating the layers that have been set using such depth expression choices is made to correspond to deepness information which is a numeral value indicating deepness in a deepness information table of which a concrete example is shown in Fig. 6, and is automatically converted to deepness information.

Here, the deepness information table is stored in storage part 103 or in vector data storage part 104. The deepness information table is stored in a ROM of storage part 103, and thereby, the values that indicate deepness included in deepness information may have been set in advance so as to be constant. In addition, the deepness information table is stored in a RAM or the like of storage part 103, and thereby, the user's setting is accepted through input part 102 so that a value that indicates deepness included in deepness information table can be updated on the basis of the accepted deepness information. That is to say, the depth information that has been set by using depth expression choices can be converted to a value that indicates an arbitrary deepness in accordance with the user's setting.

As described above, depth information is automatically converted to and set at a numeral value of deepness information by selecting depth information from among layer items such as "somewhat deep" that have been prepared for figure data. Therefore, deepness information can be added easily in comparison with a method for setting depth by inputting a numeral value for deepness information on a figure.

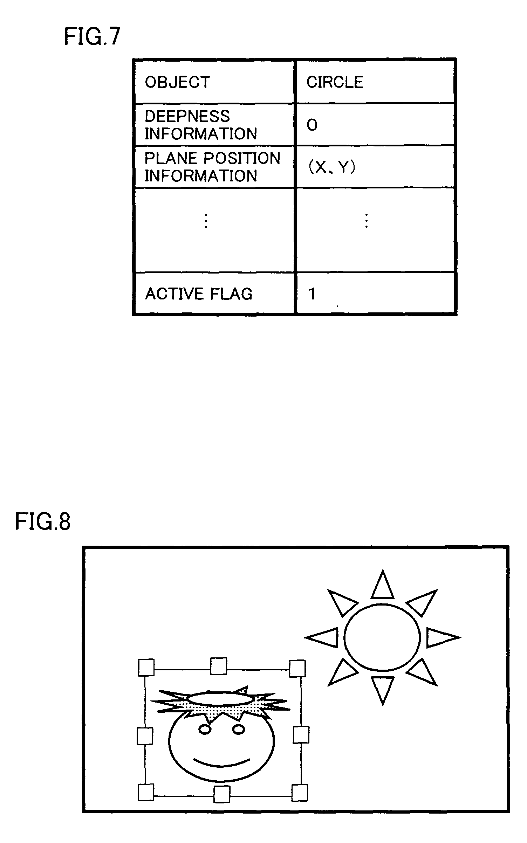

Thus, upon acceptance of depth information on this figure through input part 102 on the basis of the depth information setting menu, control part 101 refers to the deepness information table shown in Fig. 6, and writes deepness information that corresponds to depth information in the figure table of this figure, of which a concrete example is shown in Fig. 7, so as to store the deepness information in vector data storage part 104.

Here, with reference to Fig. 7, deepness information of this figure and vector data of coordinate information such as configuration points and control points are written in the figure table. In addition, an active flag that indicates whether or not this figure has been selected (whether or not it is active) may be included in the figure table. Furthermore, in the case where the contents made of a stereoscopic image that includes this figure expresses an animation sequence, information that indicates the position of this figure along the time axis may be included.

According to the above-described processing, depth information is set for the figure that has been prepared in step S101.

Here, in the case where a plurality of figures have been prepared in step S101, depth information can be set for each figure in step S105.

In this case, first, a figure where depth information is to be set is selected on the basis of an input through input part 102. Alternatively, a key frame that is included in the contents that have been prepared as an animation sequence may be selected from such contents, and then, a figure that is included in the image may be selected. As another alternative, information (time or the like) that indicates a position along a predetermined time axis may be selected, and thereby, a figure that includes this information in the figure table may be selected.

Here, Fig. 8 shows a concrete example of a screen that is displayed on 2-D display part 106 when a figure is selected. That is to say, as shown in Fig. 8, in the case where there are a plurality of figures in a plane, when a figure of which depth information is to be set is selected, the selected figure is actively displayed so as to indicate the selected figure. In addition, the active flag that is included in the figure table of the selected figure is set. After this, the above-described processing for setting depth information is carried out on the selected figure.

In addition, in step S105, a plurality of figures are selected, and thereby, depth information can be collectively set for the plurality of figures.

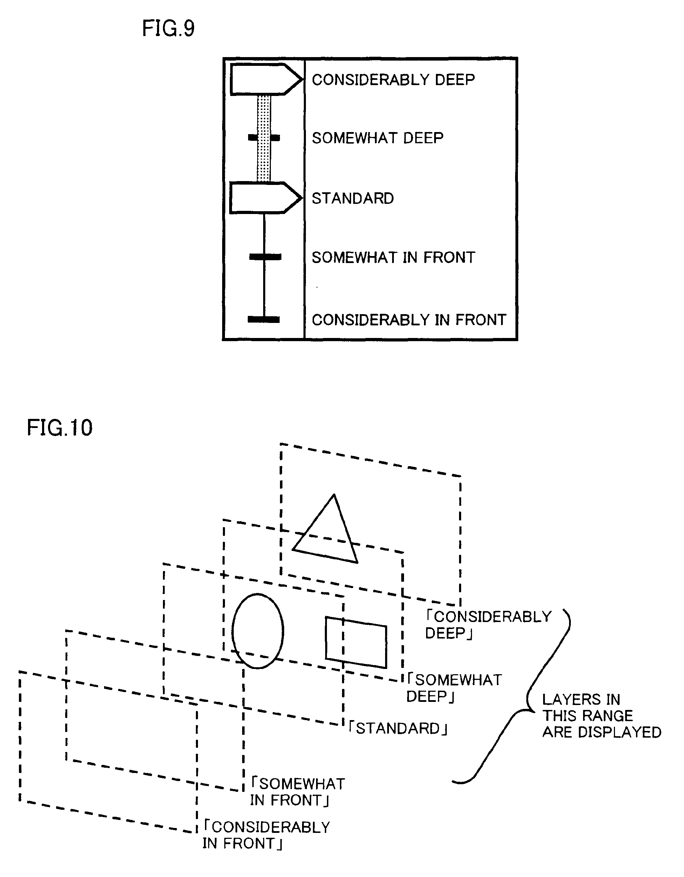

Next, depth information that has been set in step S105 is confirmed (S107). In order to confirm depth information in step S107, first, a depth information confirmation menu for confirming depth information is displayed on 2-D display part 106. Here, Fig. 9 shows a concrete example of a depth information confirmation menu that is displayed.

Based on the depth information confirmation menu of which a concrete example is shown in Fig. 9, input part 102 accepts input in a range of depths that is displayed on 2-D display part 106. In the concrete example shown in Fig. 9, the range of the depth has been inputted so that the range of the depth from the "standard" layer to the "considerably deep" layer is displayed. As described above, the method for inputting the depth that is displayed on 2-D display part 106 may be a method for designating the range of the depth by means of a pointer in lever style, such as in the depth information confirmation menu of which a concrete example is shown in Fig. 9, or may be a method for individually designating only depth layers to be displayed by checking in a depth information confirmation menu in check box style, not shown. In addition, such a designation of a range to be displayed and such an individual designation of depth to be displayed may both be carried out.

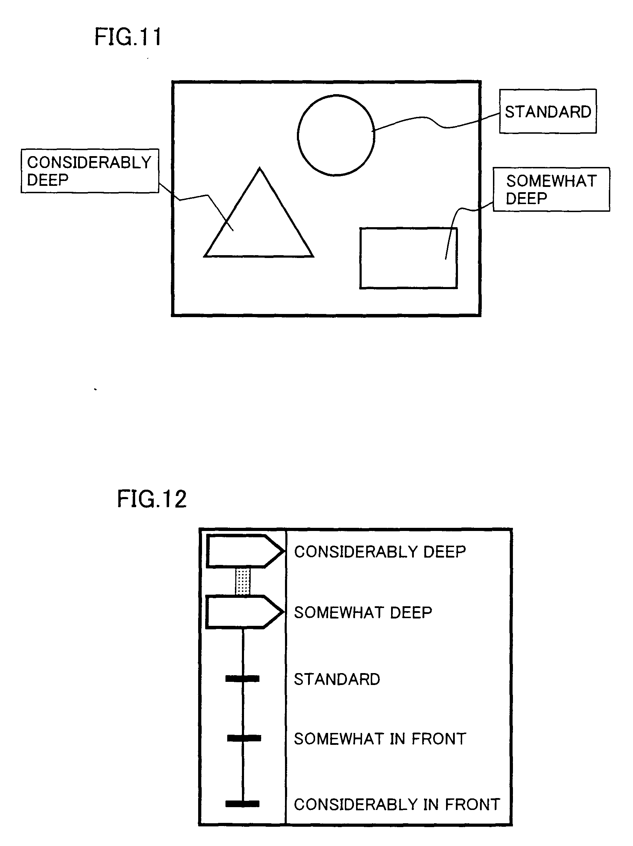

When a range of depths to be displayed of which a concrete example is shown in Fig. 9 is designated, as shown in Fig. 10, only figures that exist in the layers in the designated range of depths are sampled. That is to say, figure tables for the respective figures are searched for, and figures having deepness information that corresponds to this range of depths are sampled. Thus, as shown in Fig. 11, the figures are displayed on 2-D display part 106.

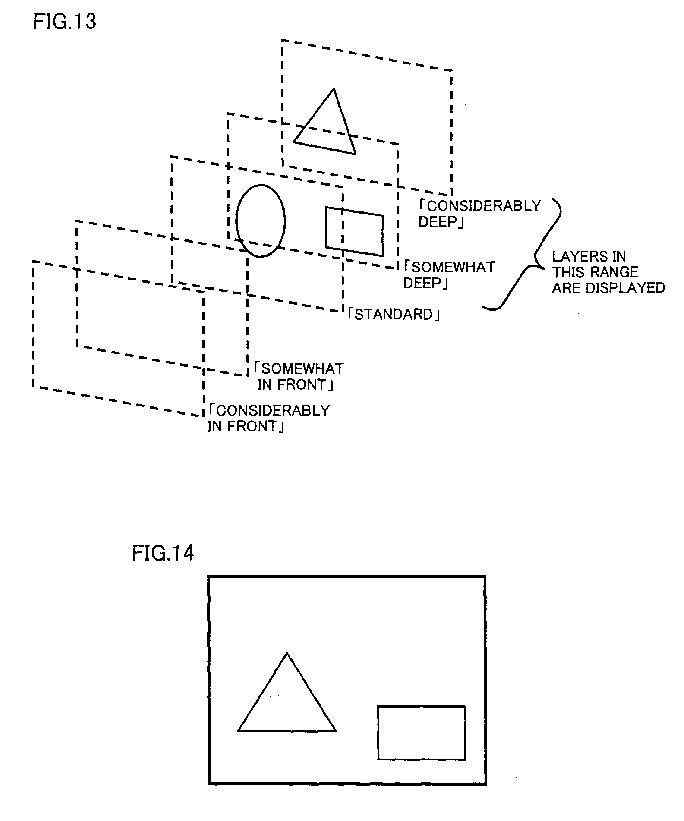

In addition, in the case where input part 102 accepts an input, as shown in Fig. 12, in the depth information confirmation menu, figures that exist in the layers in the range of depths shown in Fig. 13 are sampled so as to be displayed on 2-D display part 106, as shown in Fig. 14.

As described above, in step S107, only the figures that exist in the layers in the designated depth are displayed, and thereby, the figures having the designated depth information can be easily confirmed from among the figure data group which is being edited, on 2-D display part 106. That is to say, depth information that has been set in the figures can be easily confirmed, even in a display apparatus where a 3-D display part is not possible. Such a method for confirming depth information is effective particularly in the case where the prepared contents are an animation or the like.

As a result of the above-described confirmation of depth information, data that includes depth information is outputted (S111) in the case where the setting is appropriate (YES in S109).

Here, the data may be outputted on 2-D display part 106 indicating the depth, or on a 3-D display part in the case where a 3-D display part, not shown, is included. In addition, data that includes depth information may be outputted to an external apparatus by output part 108 via a communication line such as a LAN (Local Area Network) or through wireless communication. Alternatively, in the case where output part 108 is a write-in portion to a recording medium such as a flexible disk, data that includes depth information may be outputted to the recording medium by means of output part 108.

As a result of the confirmation of depth information, in the case where the setting inappropriate (NO in S109), the procedure returns to step S105 again, setting depth information. Here, though the above-described setting method can be carried out again as the editing method, an editing method as that described below may also be carried out.

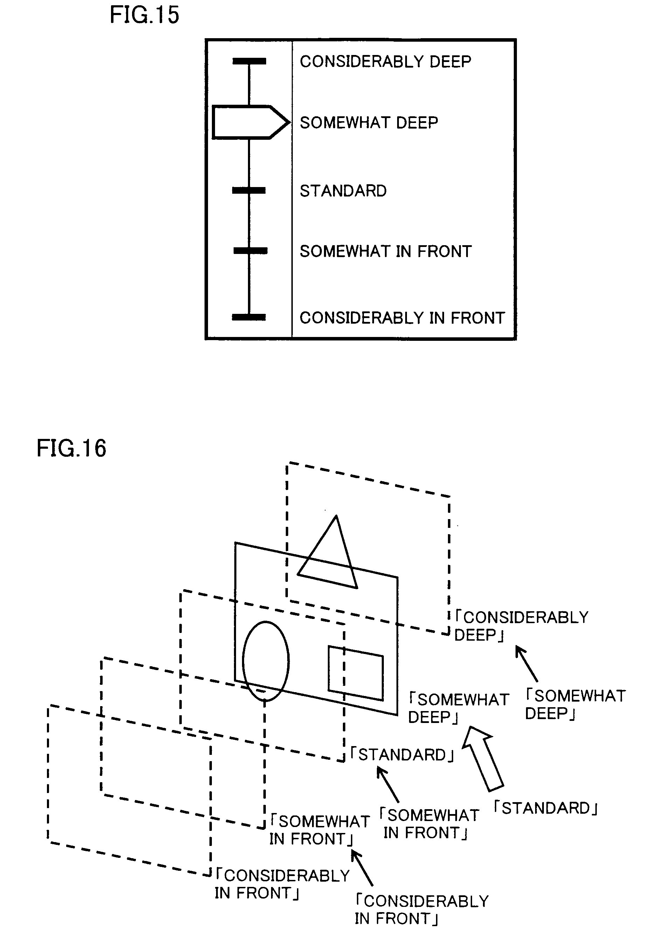

That is to say, in the case where a figure of which depth information has already been set is edited, an editing menu is displayed on 2-D display part 106. Here, Fig. 15 shows a concrete example of the displayed editing menu.

Input part 102 accepts the designation of the layer that corresponds to the depth "standard" on the basis of the editing menu of which a concrete example is shown in Fig. 15. In the concrete example shown in Fig. 15, the designation has been inputted in a manner where the layer that conventionally corresponds to the depth "somewhat deep" has been converted to the depth "standard." As described above, the method for inputting designation of the layer that newly corresponds to the depth "standard" may be a method for designating the corresponding depth by means of a pointer in lever style in the editing menu of which a concrete example is shown in Fig. 15, or may be a method for designating the depth to be displayed by checking in an editing menu in check box style, not shown.

As shown in the concrete example of Fig. 15, when the layer that corresponds to the depth "standard" is designated, as shown in Fig. 16, deepness information that corresponds to all of the layers of the prepared depth is edited, and the depth information of the figures that exist in these layers is edited. That is to say, the above-described editing is carried out on the item that indicates depth information such as "considerably deep" corresponding to the deepness information of the figure table of each figure, and thereby, deepness information of the figure table of each figure is rewritten to deepness information that corresponds to an item for indicating new depth information.

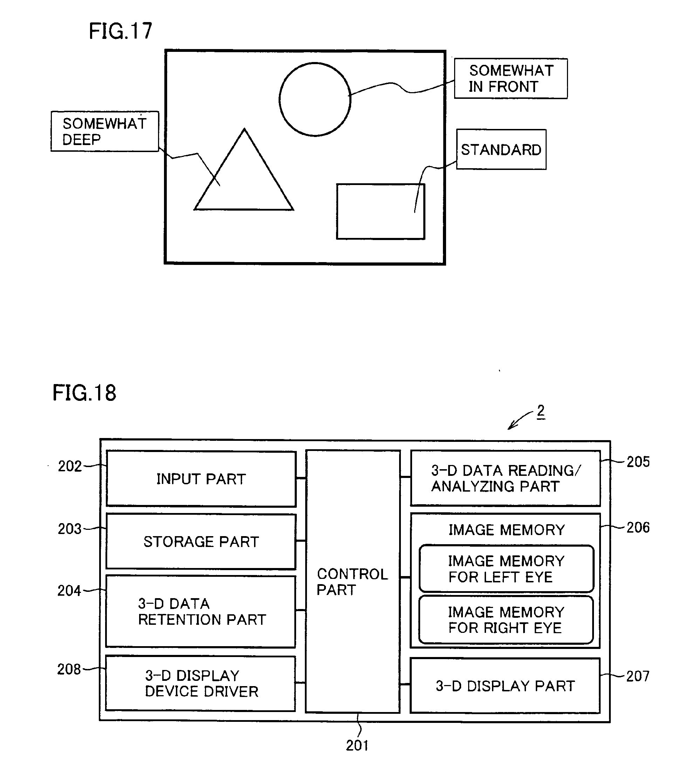

By carrying out such editing, a figure where the depth information has been set, as shown in Fig. 11, is edited, as shown in Fig. 17. That is to say, it becomes possible to edit the absolute deepness information while maintaining information on the deepness relative to the "reference" layer, which is the reference plane.

The above-described editing of the depth information of a figure can be carried out on one figure, or can be carried out on a plurality of figures that have been selected by selecting a plurality of figures in advance. In addition, contents may be designated, and thereby, the editing can be carried out on all of the figures that exist in the image included in these contents. In the case where the contents to be prepared are animation contents, for example, the above-described editing can be carried out on a key frame that is a core image, and on figure data which is included in a two-dimensional image that is designated in time units. Here, image data that is included in key frames is edited, and thereby, it becomes possible to automatically edit and generate the figures which are included in images that interpolate these key frames.

As described above, editing for changing the "reference" layer, which is the reference plane, is carried out, and thereby, the entire depth information can be easily edited.

By carrying out the above-described processing in contents preparation apparatus 1, a stereoscopic image can be easily prepared by preparing a plane figure and by setting depth information on this figure. Thus, such processing is repeated for the entirety of images which are included in contents, and thereby, stereoscopic contents such as stereoscopic animation can be easily prepared.

Next, processing for reproducing the stereoscopic contents that have been prepared in contents preparation apparatus 1 is described. In the present embodiment, a case is described where the contents that have been prepared in contents preparation apparatus 1 are reproduced in contents reproduction apparatus 2. Here, though in the following description, it is assumed that contents preparation apparatus 1 and contents reproduction apparatus 2 are different apparatuses, it is, of course, possible for a single apparatus to be provided with both functions.

Fig. 18 is a diagram showing a concrete example of the configuration of contents reproduction apparatus 2 according to the present embodiment. With reference to Fig. 18, contents reproduction apparatus 2 includes a control part 201 for controlling the entirety of the apparatus, an input part 202 that accepts an input or the like of contents data, a storage part 203 for storing a program or the like that is executed by control part 201, a 3-D data retention part 204 for storing 3-D data which is contents data that have been inputted through input part 202, a 3-D data reading/analyzing part 205 for reading in and analyzing 3-D data that has been inputted, an image memory 206 formed of an image memory for the left eye and an image memory for the right eye, which is a memory for storing the results of analysis, a 3-D display part 207 for displaying 3-D contents or the like, and a 3-D display device driver 208 which is a program for controlling 3-D display part 207 for 3-D display on 3-D display part 207.

Here, the principles of stereoscopic image display as included in 3-D contents on 3-D display part 207 are briefly described.

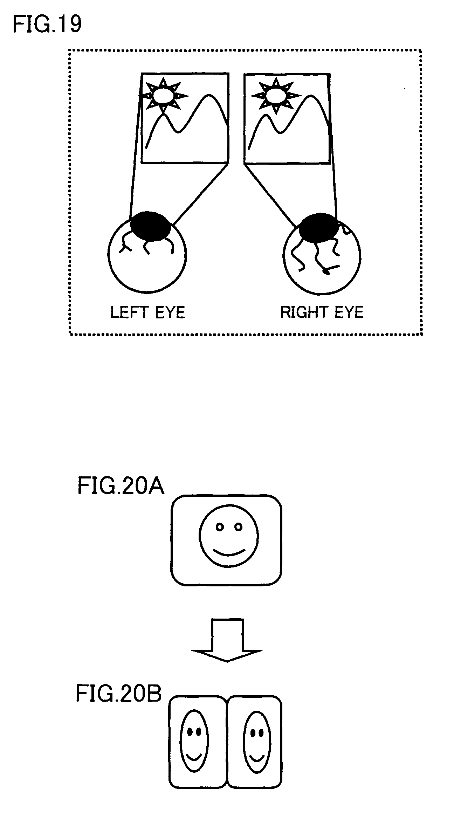

First, the left eye and the right eye of a human are separated by 6 cm to 6.5 cm on average, and therefore, viewed pictures are slightly different from each other, as shown in Fig. 19. Therefore, the picture viewed by the left and right eyes can be stereoscopically sensed. This principle is taken account of with stereoscopic viewing, and stereoscopic viewing is made possible by separately providing an image for the left eye and an image for the right eye which are slightly different from each other.

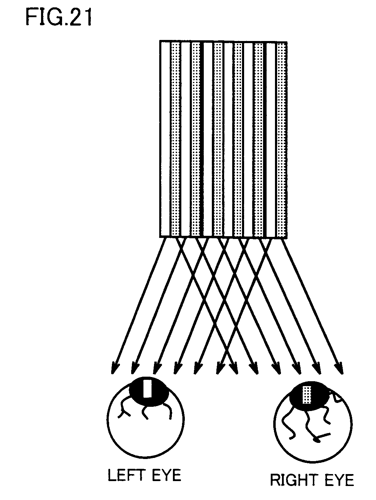

Thus, a figure is assumed where information "+3" has been set as deepness information in contents preparation apparatus 1, as shown in Fig. 20A, for example. At the time when this figure is displayed on 3-D display part 207, 3-D data reading/analyzing part 205 carries out analysis on the basis of the deepness information that has been set, and contents reproduction apparatus 2 generates an image for the left eye and an image for the right eye, as shown in Fig. 20B, in accordance with the control of control part 201. The generated image for the left eye and image for the right eye are separately stored in the image memory for the left eye and image memory for the right eye of image memory 206. Then, control part 201 executes 3-D display device driver 208, and thereby, the display shown in figure 21 appears on 3-D display part 207.

With reference to Fig. 21, control part 201 separately reads out the image for the left eye and the image for the right eye which have been separately stored in the image memory for the left eye and the image memory for the right eye, and divides these into columns of a predetermined width in the lateral direction. Thus, the columns of the image for the left eye and the image for the right eye are alternately arranged and displayed on 3-D display part 207.

3-D display part 207 may be formed of 3-D liquid crystal, for example. Therefore, the respective columns displayed on 3-D display part 207 exhibit similar effects as those of display through polarizing glass, and the columns that have been generated from the image for the left eye are viewed only by the left eye, while the columns that have been generated from the image for the right eye are viewed only by the right eye. As a result of this, the image for the left eye and the image for the right eye which are slightly different from each other and are displayed on 3-D display part 207 are separately viewed by the left eye and the right eye, so that the image made of the image for the left eye and the image for the right eye is stereoscopically viewed.

Here, though in the present embodiment, 3-D display part 207 of contents reproduction apparatus 2 is formed of the above-described 3-D liquid crystal, 3-D display part 207 may be formed in another manner that allows for similar effects as those of the display through polarizing glass, instead of the 3-D liquid crystal. In addition, 3-D display part 207 may be provided with a filter that causes such effects.

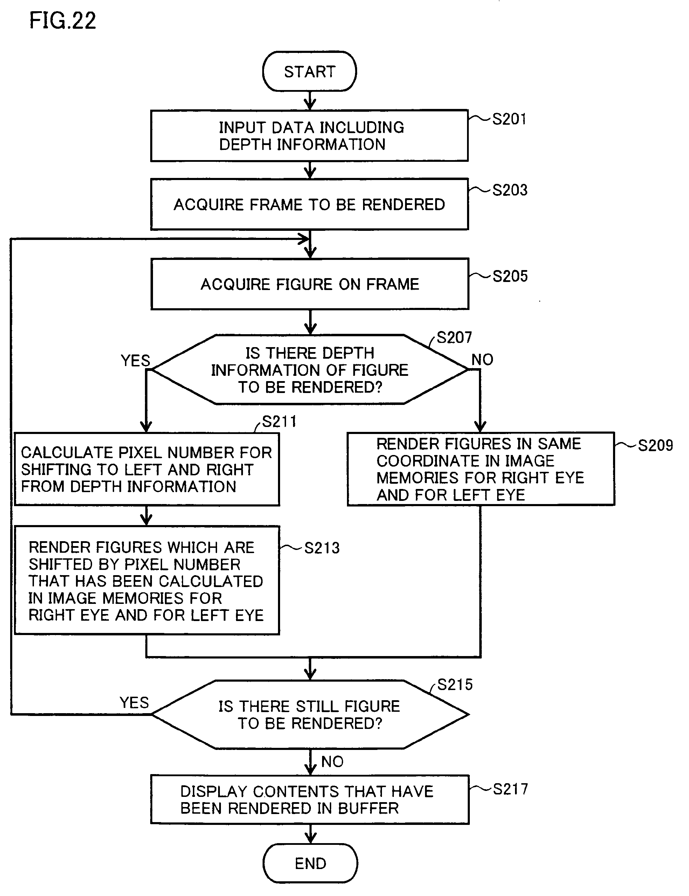

Next, contents reproduction processing for reproducing 3-D contents that have been prepared in the above-described contents preparation apparatus 1 in contents reproduction apparatus 2 according to the present embodiment is described with reference to the flowchart of Fig. 22. The processing shown in the flowchart of Fig. 22 is implemented by control part 201 of contents reproduction apparatus 2, reading out and executing the program that is stored in storage part 203, or by executing the 3-D display device driver.

With reference to Fig. 22, first, the contents data that has been prepared by contents preparation apparatus 1 is inputted through input part 202 (S201). Here, the input may be an input via a recording medium, an input via an electrical communication line such as a LAN or the like, an input through wireless communication, or another type of input. In addition, the inputted contents data may be stored in 3-D data retention part 204.

Next, in 3-D data reading/analyzing part 205, a frame that is displayed on 3-D display part 207 is acquired from among a plurality of frames (images) that form the received contents (S203). Furthermore, data of figures which are included in this frame is acquired (S205).

Next, in 3-D data reading/analyzing part 205, whether or not depth information has been set in the data of the figures that have been acquired in step S205 is checked (S207). That is to say, in step S207, whether or not deepness information has been set in the figure table of the data of these figures, as shown in Fig. 7, is checked.

Thus, in the case where depth information has not been set in the data of the figures that have been acquired in step S205 (NO in S207), it is determined that these figures are not stereoscopic images, but plane figures, and in 3-D data reading/analyzing part 205, figures for the left eye and figures for the right eye which are on the same coordinates are generated and respectively stored in the image memory for the left eye and in the image memory for the right eye of image memory 206 (S209).

In the case where depth information is set in the data of the figures that have been acquired in step S205 (YES in S207), in 3-D data reading/analyzing part 205, deepness information is read out from the figure table of the data of these figures, and on the basis of these values, the number of pixels which are the amount of shift in the images between figures for the left eye and figures for the right eye is calculated (S211). Here, a variety of methods are possible as the method for calculating the number of pixels, and the method is not limited. As a concrete example, a correspondence table, like Fig. 6, which shows that contents reproduction apparatus 2 makes deepness information and the amount of shift correspond to each other is provided, and thereby, the amount of shift may be read out from the correspondence table on the basis of the deepness information that has been read out from the figure table, in order to calculate the number of pixels. In addition, contents reproduction apparatus 2 may be provided with a calculation function that allows for calculation of a predetermined amount of shift from deepness information, and thereby, the amount of shift may be calculated using this calculation function, in order to calculate the number of pixels. Furthermore, contents reproduction apparatus 2 may be provided with a plurality of types of methods for calculating the amount of shift, such as a correspondence table and a calculation function as described above, in a manner where the amount of shift is calculated by selecting an appropriate method for calculation of the amount of shift in accordance with the contents, in order to calculate the number of pixels on the basis of this amount of shift. Here, in this case, it is preferable for contents reproduction apparatus 2 to be further provided with a contents analyzing part for analyzing the plurality of figures included in the contents, deepness information that has been set in the figures, and color, position and the like of the figures. In addition, it is preferable to select an appropriate calculation method from among the plurality of calculation methods for the amount of shift on the basis of the results of contents analysis. By doing so, even in the case where the figures included in the contents are concentrated in the layers in a predetermined range, a method for calculating the amount of shift that makes this predetermined range the maximum range of the deepness is selected, and thereby, the figures can be displayed so as to be optimally dispersed, making it possible to display the figures included in the contents in detail.

Thus, in 3-D data reading/analyzing part 205, figures for the left eye and figures for the right eye are generated by shifting the number of pixels that has been calculated in step S211, and are separately stored in the image memory for the left eye and image memory for the right eye of image memory 206 (S213).

Furthermore, whether or not a figure on which the above-described processing has not been carried out is included in the frame that has been acquired in step S203 is confirmed (S215), and processing of steps S205 to S213 is repeated for all of the figures which are included in the frame.

Thus, when the above-described processing is completed for all of the figures which are included in the acquired frame (NO in S215), figures for the left eye and figures for the right eye which have been separately stored in the image memory for the left eye and image memory for the right eye of the image memory are displayed on 3-D display part 207, as shown in Fig. 21 (S217).

3-D contents that have been prepared in contents preparation apparatus 1 can be displayed by implementing the above-described processing in contents preparation apparatus 2 according to the present embodiment.

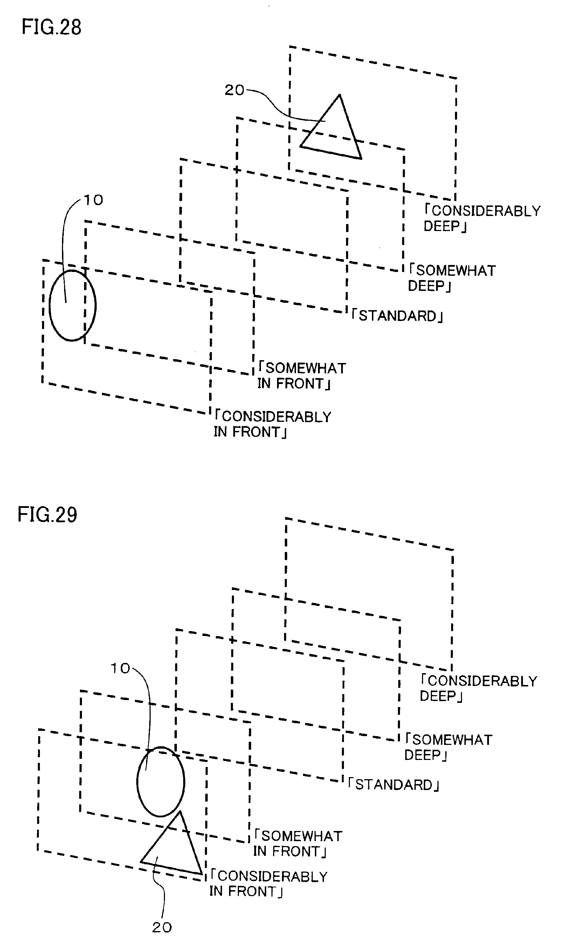

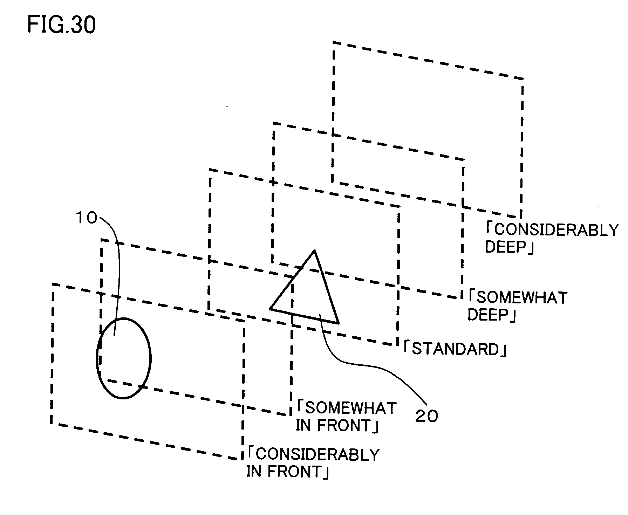

Here, in the case where contents which are an animation are reproduced in contents preparation apparatus 2, images between key frames are automatically interpolated, as described above. In the case where an animation is displayed in 3-D, it is preferable for interpolation to be carried out while taking the depth of the animation into consideration, in contents preparation apparatus 2 according to the present embodiment. Concretely speaking, in the case where the key frames of the animation that is displayed in 3-D are images as those shown in Figs. 28 and 29, it is preferable for images as those shown in Fig. 30 to be interpolated. That is to say, in the case where the depth of a figure is changed between key frames in such a manner that the depth of figure 10 is changed from "considerably in front" (Fig. 28) to "somewhat in front" (Fig. 29), and the depth of figure 20 is changed from "considerably deep" (Fig. 28) to "considerably in front" (Fig. 29), in addition to the change in position of the figure in the xy plane, as shown in Fig. 30, it is preferable for an image of which the depth is set at "standard," which is the intermediate depth between "considerably deep" and "considerably in front," to be interpolated into figure 29. This can be implemented by reading out the deepness information of the respective figures which exist in the images of the adjacent frames and which relate to each other at the time when interpolation is carried out between key frames in contents generation apparatus 2, by calculating the deepness for interpolation by calculating the intermediate deepness of the respective figures, and by displaying these figures which are included in the images to be interpolated by using the amount of shift, on the basis of the calculated deepness for interpolation.

### Modifications

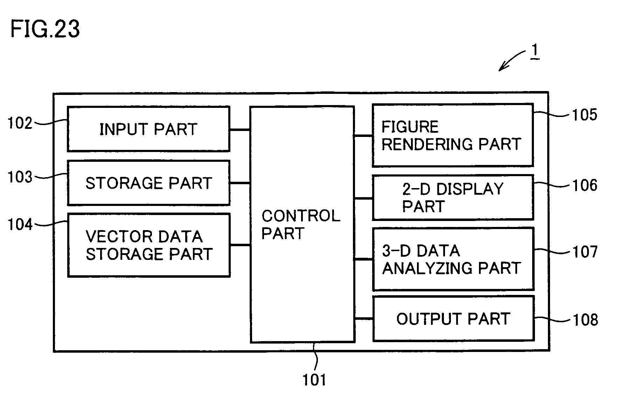

Here, the above-described embodiment is described, where 3-D contents made of figures of which the depth information has been set are prepared in contents preparation apparatus 1, and these 3-D contents are inputted and reproduced in contents reproduction apparatus 2. As described above, however, the respective configurations of contents preparation apparatus 1 and contents reproduction apparatus 2 are not limited to the configurations shown in Figs. 1 and 18. Thus, a case is described where a modification of contents preparation apparatus 1 has the configuration shown in Fig. 23.

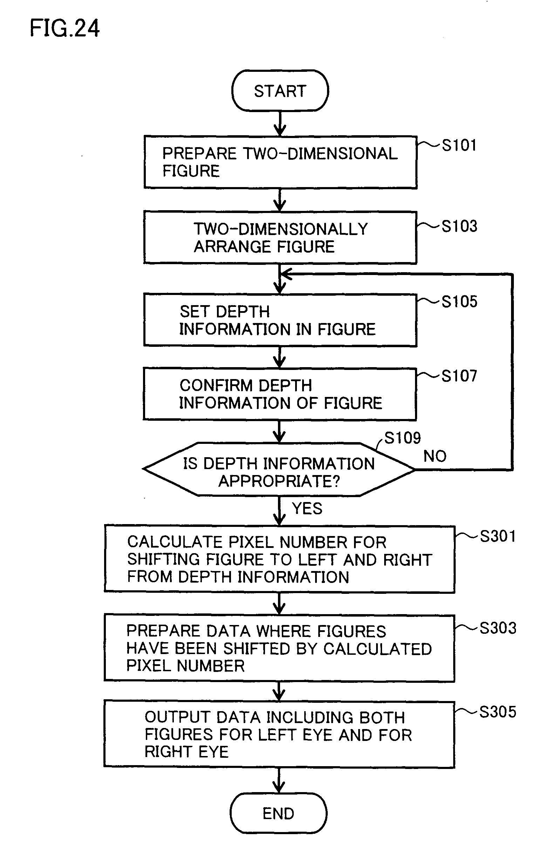

That is to say, with reference to Fig. 23, the modification of contents preparation apparatus 1 is provided with a 3-D data analyzing part 107 for analyzing the prepared contents. In addition, contents preparation apparatus 1 carries out the contents preparation processing shown in Fig. 24.

With reference to Fig. 24, the modification also carries out the processing in steps S101 to S109, which is the contents preparation processing shown in Fig. 4. Then, when appropriate depth information is set for a figure (YES in S109), 3-D data analyzing part 107 subsequently analyzes the prepared figure and calculates the number of pixels which become the amount of shift in the images between figures for the left eye and figures for the right eye on the basis of deepness information that is stored in the figure table of this figure (S301). Furthermore, figures for the left eye and figures for the right eye are generated by shifting the number of pixels that has been calculated in step S301 (S303), and the figures for the left eye and the figures for the right eye are outputted in place of the data of the figure that includes depth information, in step S111.

The processing shown in steps S301 to S303 is the processing that is carried out in 3-D data reading/analyzing part 205 of contents reproduction apparatus 2 in the above-described embodiment, and this processing is carried out in 3-D data analyzing part 107 of contents preparation apparatus 1 in the modification.

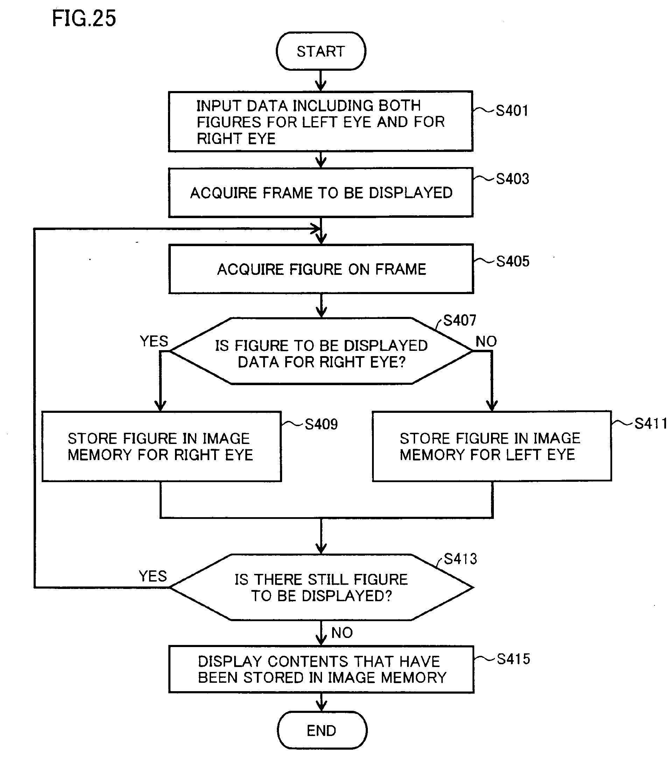

Therefore, contents reproduction apparatus 2 in the modification reproduces the contents that have been prepared in the above-described processing by carrying out contents reproduction processing as shown in the flowchart of Fig. 25.

With reference to Fig. 25, input part 202 of contents reproduction apparatus 2 in the modification accepts an input of contents data that includes figures for the left eye and figures for the right eye which has been outputted from contents preparation apparatus 1, as described above (S401). Then, a frame to be displayed on 3-D display part 207 is acquired from the data (S403), and data of the figures that are included in this frame is acquired (S405).

Next, 3-D data reading/analyzing part 205 determines only whether or not these figures are figures for the left eye or figures for the right eye (S407), and stores these in the respective memories of image memory 206.

Thus, when the processing for all of the figures is completed (NO in S413), the figures that have been stored in the respective image memories are displayed on 3-D display part 207 (S415).

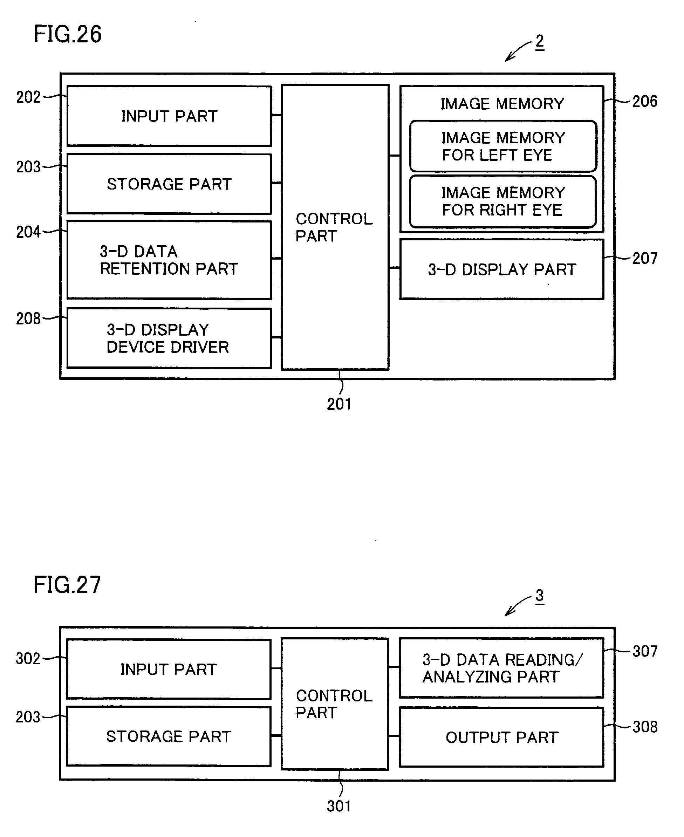

As described above, 3-D images are analyzed in contents preparation apparatus 1 in the modification, where figures for the right eye and figures for the left eye are generated and outputted, and thereby, whether figures are for the left eye or for the right eye is solely determined in contents reproduction apparatus 2. As a result of this, the configuration of contents reproduction apparatus 2 can be simplified, as that shown in Fig. 26. That is to say, 3-D data reading/analyzing part 205 for generating figures for the right eye and figures for the left eye can be made unnecessary, in contrast to the configuration of contents reproduction apparatus 2 shown in Fig. 18.

Here, in contents reproduction apparatus 2 of the first embodiment, additional processing may be carried out for converting deepness information on figures included in the contents that have been inputted in accordance with the display performance on 3-D display part 207 of contents reproduction apparatus 2.

In addition, data that includes deepness information may be outputted from contents preparation apparatus 1 of the present embodiment, and the outputted data may be processed so as to be converted by contents conversion apparatus 3, which may be a server or the like, in accordance with the 3-D display performance of contents reproduction apparatus 2. In addition, data may be outputted in the data format of contents preparation apparatus 1 in the modification, and this outputted data may be displayed on contents reproduction apparatus 2 in the modification. A concrete example of the configuration of contents conversion apparatus 3 at this time is shown in Fig. 27. With reference to Fig. 27, contents conversion apparatus 3 accepts data that has been outputted from output part 108 of contents preparation apparatus 1 through input part 302. Thus, according to the control of control part 301, deepness information that has been stored in storage part 303, and a table for calculation on the basis of the performance of the reproduction apparatus are used in 3-D data analyzing part 307, and thereby, the optimal number of pixels for the shift to the left and right is calculated. Furthermore, both data for the right eye and data for the left eye that has been shifted by the calculated number of pixels is outputted from output part 308.

Furthermore, the above-described contents preparation method and contents editing method can be provided as programs. Such programs can be recorded in recording media that can be read by a computer, such as flexible disks, CD-ROMs (Compact Disc ROMs), ROMs, RAMs and memory cards which are accessories for computers, so as to be provided as program products. Alternatively, the programs can be provided by being recorded in recording media such as hard disks which are built into computers. In addition, the programs can be provided by means of downloading via a network.

The program products that have been provided can be installed and executed in a program storage part such as a hard disk. Here, program products include programs themselves and recording media that have recorded programs.

Here, the embodiments which are disclosed in this specification are illustrative in all aspects, and should not be considered as being limitative. The scope of the present invention is defined not by the above description, but by the claims, and is intended to include meanings which are equivalent to the claims and all the modifications within the scope.

## Claims

1. A contents preparation apparatus comprising:
a depth information setting part (101, 102) which sets depth information for two-dimensional figure data; and
an output part (108) which outputs figure data where said depth information has been set.

2. A contents editing apparatus for editing contents where depth information has been set for two-dimensional figure data, comprising:
a display information input part (102) which accepts an input of depth information on the depth to be displayed; and
a display part (106) which displays only figure data where said accepted depth information has been set.

3. A contents editing apparatus for editing contents where depth information on the relative relationship of depth between two-dimensional figure data and a predetermined plane that is a reference plane has been set, comprising:
a reference plane depth information setting part (102) which sets depth information for said reference plane; and
a depth editing part (101) which edits depth information that has been set for said figure data in accordance with said depth information that has been set for said reference plane.

4. A contents reproduction apparatus for stereoscopically reproducing contents that include two-dimensional figure data where depth information has been set, comprising:
a depth information read-out part (205) which reads out said depth information from said figure data;
a shift amount calculation part (205) which calculates an amount of shift in images between data for the left eye and data for the right eye of said figure data, on the basis of said read out depth information;
a generation part (205) which generates said data for the left eye and said data for the right eye, on the basis of said calculated shift amount; and
a reproduction part (207) which reproduces said generated data for the left eye and data for the right eye.

5. The contents reproduction apparatus according to claim 4, wherein a plurality of said methods for calculating said amount of shift are provided in said shift amount calculation part (205).

6. The contents reproduction apparatus according to claim 5, further comprising a contents analyzing part (205) which analyzes said contents, wherein
said shift amount calculation part (205) calculates said amount of shift by selecting a predetermined method for calculating the amount of shift from among said plurality of methods for calculating the amount of shift in accordance with the results of contents analysis by said contents analyzing part.

7. A contents preparation method, comprising:
a depth information setting step (S105) of setting depth information for two-dimensional figure data; and
an output step (S111) of outputting figure data where said depth information has been set.

8. The contents preparation method according to claim 7, further comprising a conversion step (S105) of converting said depth information set in depth information setting step into deepness information that indicates the corresponding deepness, wherein
in said output step (S111), said figure data to which said deepness information converted has been added is outputted.

9. The contents preparation method according to claim 7, further comprising:
a depth information setting display step (S105) of displaying said depth information selectable as depth layers information; and
a depth information input step (S105) of accepting an input of depth information that is to be set for said figure data on the basis of said depth information displayed in said depth information setting display step, wherein
in said depth information setting step (S105), said depth information accepted is set for said figure data.

10. The contents preparation method according to claim 7, further comprising a figure data selection step (S105) of selecting said figure data, wherein
in said depth information setting step (S105), said depth information is set for said figure data selected.

11. A contents editing method for editing contents where depth information has been set for two-dimensional figure data, comprising:
a display information input step (S107) of accepting an input of depth information on a depth to be displayed; and
a display step (S107) of displaying only figure data where said depth information accepted has been set.

12. The contents editing method according to claim 11, wherein
in said display information input step (S107), an input of a depth range that is to be displayed, of said depth information is accepted, and
in said display step (S107), only figure data is displayed where the depth information that corresponds to said depth range accepted has been set.

13. The contents editing method according to claim 11, wherein in said display information input step (S107), said figure data is displayed editable.

14. A contents editing method for editing contents where depth information on the relative relationships of depth between two-dimensional figure data and a predetermined plane that is a reference plane has been set, comprising:
a reference plane depth information setting step (S105) of setting depth information for said reference plane, and;
a depth editing step (S105) of editing depth information that has been set in said figure data in accordance with said depth information that has been set for said reference plane.

15. The contents editing method according to claim 14, wherein in said depth editing step (S105), depth information that has been set for said figure data is changed on the basis of said depth information that has been set for said reference plane while maintaining said relative relationship of depth between said figure data and said reference plane.

16. The contents editing method according to claim 14, further comprising a figure data selection step (S106) of selecting said figure data, wherein
in said depth editing step (S105), said depth information that has been set for said figure data selected is edited.

17. A contents reproduction method for stereoscopically reproducing contents that include two-dimensional figure data where depth information has been set, comprising:
a depth information read-out step (S211) of reading out said depth information from said figure data;
a shift amount calculation step (S211) of calculating an amount of shift in images between data for the left eye and data for the right eye of said figure data on the basis of said depth information read out;
a generation step (S213) of generating said data for the left eye and said data for the right eye on the basis of said shift amount calculated; and
a reproduction step (S217) of reproducing said generated data for the left eye and data for the right eye generated.

18. A contents preparation program product for allowing a computer to execute:
a depth information setting step (S105) of setting depth information for two-dimensional figure data; and
an output step (S111) of outputting figure data where said depth information has been set.

19. A contents editing program product for allowing a computer to execute a contents editing method for editing contents where depth information has been set for two-dimensional figure data, which allows a computer to execute:
a display information input step (S107) of accepting an input of depth information on a depth to be displayed; and
a display step (S107) of displaying only figure data where said depth information accepted has been set.

20. A portable communication terminal for stereoscopically reproducing contents that include two-dimensional figure data where depth information has been set, comprising:
a depth information read-out part (205) which reads out said depth information from said figure data;
a shift amount calculation part (205) which calculates an amount of shift in images between data for the left eye and data for the right eye of said figure data, on the basis of said read out depth information;
a generation part (205) which generates said data for the left eye and said data for the right eye on the basis of said calculated shift amount; and
a reproduction part (207) which reproduces said generated data for the left eye and data for the right eye.

21. The portable communication terminal according to claim 20, wherein a plurality of said methods for calculating said amount of shift are provided in said shift amount calculation part (205).

22. The portable communication terminal according to claim 21, further comprising a contents analyzing part (205) which analyzes said contents, wherein
said shift amount calculation part (205) calculates said amount of shift by selecting a predetermined method for calculating the amount of shift from said plurality of methods for calculating the amount of shift in accordance with the results of contents analysis by said contents analyzing part.
